# EUROPÄISCHE PATENTANMELDUNG

(11) **EP 4 614 030 A2**
(43) Veröffentlichungstag der Anmeldung: **10.09.2025**
(21) Anmeldenummer: 25185107.7
(22) Anmeldetag: 28.03.2022
(51) Int. Cl.: F16H 63/34

(54) **PARKSPERRENMODUL**

(30) Priorität: 17.05.2021 DE 102021204936
(62) Teilanmeldung aus: 22718679.8
(71) Anmelder: Robert Bosch GmbH, 70442 Stuttgart (DE)
(72) Erfinder: Gauger, Moritz, 70192 Stuttgart (DE); Drewe, Ingo, 23769 Fehmarn (DE); Reimann, Mario, 71336 Waiblingen (DE); Saretzki, Manfred, 70180 Stuttgart (DE); Hecht, Robert, 73249 Wernau (DE)

(57) **Zusammenfassung**

Die Erfindung bezieht sich auf ein Parksperrenmodul (30) mit einem Stellmotor (34) und einer rotatorisch bewegbaren Aktuierungsmechanik (42). Das Parksperrenmodul (30) ist an einem Getriebe (24) angeordnet, das durch eine elektrische Maschine (22) angetrieben ist. Das Parksperrenmodul (30) umfasst ein Parksperrenrad (46), welches auf einer Welle (74) drehfest gelagert ist. Die Welle (74) ist in einer ihre Torsionssteifigkeit reduzierenden Länge (76) ausgeführt und drehfest mit einem Zahnrad (48, 60) des Getriebes (24) verbunden. Die Erfindung bezieht sich ferner auf eine Verwendung des Parksperrenmoduls (30) im Antriebsstrang (12) eines elektrisch angetriebenen Fahrzeugs, insbesondere eines Personenwagens oder eines Nutzfahrzeugs.

## Beschreibung

### Technisches Gebiet

Die Erfindung bezieht sich auf einen Antriebsstrang mit einer elektrischen Maschine, einem Getriebe und einem Parksperrenmodul mit einem Stellmotor und einer rotatorisch bewegbaren Aktuierungsmechanik, welches an dem Getriebe, das durch eine elektrische Maschine angetrieben ist, angeordnet ist. Des Weiteren bezieht sich die Erfindung auf die Verwendung des Parksperrenmoduls im Antriebsstrang mit einer elektrischen Maschine und einem Getriebe eines Nutzfahrzeugs oder eines Personenwagens.

### Stand der Technik

DE 10 2011 086 547 A1 bezieht sich auf eine Parksperre. Die Parksperre umfasst eine um eine Drehachse verschwenkbare Sperrklinke. Diese weist einen Klinkenzahn auf, der zum Eingriff in eine Sperrverzahnung vorgesehen ist. Mit der Sperrklinke ist eine Betätigungseinheit mechanisch koppelbar, über die der Klinkenzahn gegen die Sperrverzahnung reversibel in Eingriff bringbar ist. Das Getriebe umfasst ein Getriebegehäuse mit einer Öffnung. In diese Öffnung ist die separat vom Getriebegehäuse gefertigte Parksperre als separate Baueinheit eingesetzt. Dadurch ist die Öffnung als ein Teil des Getriebegehäuses zum Teil verschlossen. Ein Aktuator zur Betätigung der Parksperre ist versetzt zur Aktuierungsrichtung einer Klinke der Parksperre angeordnet. Die Klinke ist als Nocken ausgeführt und wird um eine Drehachse verschwenkt.

DE 10 2011 086 239 A1 hat eine Parksperre zum Gegenstand. Diese weist eine um eine Drehachse verschwenkbare Sperrklinke mit einem Klinkenzahn zum Eingriff in eine Sperrverzahnung auf. Des Weiteren ist eine mit der Sperrklinke mechanisch koppelbare Betätigungseinheit vorgesehen, über die der Klinkenzahn gegen die Sperrverzahnung reversibel in Eingriff bringbar ist und mittels eines Aktuators translatorisch verschoben werden kann. Es wird ein Federelement eingesetzt, durch das ein Teil der Betätigungseinheit vorgespannt werden kann, wobei die Betätigungseinheit eine in Bewegungsrichtung gerichtete Ausnehmung als eine Durchgangsausnehmung oder als ein Sackloch für das Federelement aufweist.

DE 10 2010 053 861 A1 hat ebenfalls eine Parksperre zum Gegenstand. Diese umfasst eine Sperrklinke, die um eine Drehachse verschwenkbar ist, mit einem Klinkenzahn zum Eingriff in eine Sperrverzahnung. Es ist eine mit der Sperrklinke mechanisch koppelbare Betätigungseinheit vorgesehen, über die der Klinkenzahn gegen die Sperrverzahnung reversibel in Eingriff bringbar ist. Die Betätigungseinheit ist durch einen Aktuator über eine Funktionsfläche translatorisch bewegbar, wobei die Funktionsfläche an der nicht stirnflächigen Mantelfläche der Betätigungseinheit angeordnet ist.

In den meisten Anwendungen von Parksperren findet eine formschlüssige Blockierung mittels eines Parksperrenrads, in welches eine Klinke einrastet, statt. In der Regel ist das Parksperrenrad fest mit einer der Getriebewellen des Getriebes verbunden und mit einer groben Verzahnung versehen. An der Klinke befindet sich ein auf die Verzahnung des Parksperrenrads angepasster Gegenzahn. Die Klinke ist drehbar im Getriebegehäuse gelagert und stützt sich gegen dieses ab und wird durch eine Klinkenfeder aktiv in der entsperrten Position gehalten, in der sich das Parksperrenrad frei drehen kann. Bei der Aktuierung der Parksperre wird die Klinke durch ein mechanisches Sperrelement in Richtung des Parksperrenrads gedrückt und sperrt somit, wenn die Verzahnung von Klinke und Parksperrenrad in Eingriff miteinander sind, das Wiederausrücken der Klinke. An dem mechanischen Sperrelement befindet sich in der Regel eine Ausgleichsfeder. Diese ermöglicht erst, die Parksperre auch bei einer "Zahn-auf-Zahn"-Stellung von Klinke und Parksperrenrad zu aktivieren. Die Parksperre ist in diesem Zustand in Sperrbereitschaft. Rollt das Fahrzeug weiter, was eine weitere Drehung des Parksperrenrads mit sich führt, rastet die Klinke automatisch ein. Dies kann jedoch dazu führen, dass sich das Fahrzeug trotz eingelegter Parksperre noch wenige Zentimeter bewegt, was zwischen 0 cm und 15 cm je nach Fahrtrichtung ausmachen kann.

### Darstellung der Erfindung

Erfindungsgemäß wird ein Parksperrenmodul mit einem Stellmotor und einer rotatorisch bewegbaren Aktuierungsmechanik vorgeschlagen, wobei das Parksperrenmodul an einem Getriebe, das durch eine elektrische Maschine angetrieben ist, angeordnet ist. Das Parksperrenmodul umfasst ein Parksperrenrad, welches auf einer Welle drehfest gelagert ist, die in einer ihre Torsionssteifigkeit reduzierenden Länge ausgeführt und drehfest mit einem Zahnrad des Getriebes verbunden ist.

Durch diese Auslegung des Parksperrenmoduls kann ein separates Parksperrenmodul zur Verfügung gestellt werden, welches an unterschiedlichen Einbauorten am Getriebe eingebaut werden kann und aufgrund seiner weichen Ankopplung über eine relativ lang ausgebildete Welle eine Reduktion der auf den Rotor der elektrischen Maschine einwirkenden Drehmomente und Stöße ermöglicht.

In weiterer Ausgestaltung des erfindungsgemäß vorgeschlagenen Parksperrenmoduls ist das Zahnrad des Getriebes an einer Hohlwelle ausgebildet, die über mindestens eine Wellen-Naben-Verbindung mit der Welle drehfest verbunden ist.

In einer weiteren vorteilhaften Ausgestaltung des erfindungsgemäß vorgeschlagenen Parksperrenmoduls weist der Stellmotor im Parksperrenmodul in Bezug auf die Aktuierungsmechanik einen 90°-Versatz auf. Dadurch kann in vorteilhafter Weise eine optimale Ausnutzung des zur Verfügung stehenden Bauraums innerhalb des Gehäuses des Parksperrenmoduls erreicht werden.

In einer weiteren vorteilhaften Ausbildungsmöglichkeit des erfindungsgemäß vorgeschlagenen Parksperrenmoduls ist im Parksperrenmodul zwischen dem Stellmotor und der Aktuierungsmechanik ein Untersetzungsgetriebe, mindestens ein Schneckenrad umfassend, angeordnet.

Das erfindungsgemäß vorgeschlagene Parksperrenmodul kann am Getriebe in einer ersten Einbauposition oder in einer zweiten Einbauposition angeordnet werden, so dass die Varianz der Einbaumöglichkeiten erhöht wird und aufgrund der höheren Variabilität ein Kosten- und Wettbewerbsvorteil erzielt werden kann.

Das erfindungsgemäß vorgeschlagene Parksperrenmodul wird in vorteilhafter Weise derart am Getriebe angeordnet, dass sowohl in der ersten Einbauposition als auch in der zweiten Einbauposition des Parksperrenmoduls ein Abtriebsflansch für die Kardanwelle im Antriebsstrang und das Parksperrenrad miteinander fluchten.

In einer weiteren vorteilhaften Ausgestaltung des erfindungsgemäß vorgeschlagenen Parksperrenmoduls ist die Hohlwelle, in der die Welle über mindestens eine Wellen-Naben-Verbindung drehfest gelagert ist, in mindestens zwei Wälzlagern gelagert.

Das Parksperrenmodul realisiert im blockierten Zustand des Parksperrenmoduls einen Kraftfluss, der über die Welle in die mindestens eine Wellen-Naben-Verbindung verläuft und von dort über die Hohlwelle und das an dieser ausgebildete Zahnrad in das Getriebe verläuft. Dadurch ist bei aktiviertem Parksperrenmodul die Blockierung einer Drehbewegung der Komponenten des Getriebes sichergestellt.

Beim erfindungsgemäß vorgeschlagenen Parksperrenmodul erfolgt in vorteilhafter Weise eine Sensierung einer Position der Parksperrenaktuierung über einen Sensor und einen Magneten, wobei sowohl der Sensor als auch der Magnet axial zur Aktuierungswelle der Parksperrenaktuierung aufgenommen sind.

Das erfindungsgemäß vorgeschlagene Parksperrenmodul lässt sich in der ersten Einbauposition einer ersten Übersetzungsstufe des Getriebes und in einer zweiten Einbauposition einer zweiten Übersetzungsstufe des Getriebes zuordnen.

Darüber hinaus betrifft die Erfindung die Verwendung des Parksperrenmoduls im Antriebsstrang mit einer elektrischen Maschine und einem Getriebe eines elektrisch angetriebenen Nutzfahrzeugs oder eines elektrisch angetriebenen Personenwagens.

### Vorteile der Erfindung

Das erfindungsgemäß vorgeschlagene Parksperrenmodul bietet in vorteilhafter Weise die Möglichkeit, dieses an beiden Getriebeausgängen anzubringen.

Um eine Modularität für eine große Anzahl von Einsatzmöglichkeiten zu nutzen, ist eine kompakte Ausgestaltung des Parksperrenmoduls durch eine um 90° versetzte Anordnung des Stellmotors des Parksperrenmoduls in Bezug auf eine Aktuierungsmechanik verwirklicht. Des Weiteren ist ein Untersetzungsgetriebe in Gestalt eines Schneckengetriebes zwischen dem Stellmotor und der Aktuierungsmechanik Teil des Parksperrenmoduls. Das Untersetzungsgetriebe weist eine Selbsthemmung auf, was einen zusätzlichen Sicherheitsaspekt darstellt. Durch den 90°-Versatz des Stellmotors des Parksperrenmoduls in Bezug auf die Aktuierungsvorrichtung lässt sich die axiale Baulänge des Parksperrenmoduls extrem reduzieren.

Beim erfindungsgemäß vorgeschlagenen Parksperrenmodul erfolgt die Sensierung der Parksperrenposition stirnseitig axial zu einer Aktuierungswelle der Aktuierungsmechanik, die des Weiteren ein als verschwenkbaren Nocken ausgeführtes Element umfasst.

Das erfindungsgemäß vorgeschlagene Parksperrenmodul zeichnet sich insbesondere dadurch aus, dass eine weiche Anbindung des Parksperrenmoduls an das Getriebe über eine relativ lange Welle erfolgt, so dass Stöße und Erschütterungen, die auf den Rotor und andere Komponenten der elektrischen Maschine einwirken können, aufgrund der verringerten Torsionssteifigkeit der Welle erheblich gedämpft werden, was über die Standzeit des elektrischen Antriebsstrangs eines Nutzfahrzeugs oder eines Personenkraftwagens gesehen von Vorteil ist. Zudem ist als weitere Dämpfungsmaßnahme gegen die Weiterleitung von Stößen und Erschütterungen an die Komponenten der elektrischen Maschine das Parksperrenrad mittels eines Hülsenteils auf der Welle gelagert.

### Kurze Beschreibung der Zeichnungen

Anhand der Zeichnungen wird die Erfindung nachstehend eingehender beschrieben.

Es zeigen:
- Figur 1: eine schematische Darstellung eines Antriebsstrangs für ein elektrisch angetriebenes Fahrzeug,
- Figur 2: eine Seitenansicht der Komponenten des Parkmoduls in perspektivischer Wiedergabe,
- Figur 3: Teile des Parksperrenmoduls in perspektivischer Ansicht,
- Figur 4: eine Seitenansicht auf ein Getriebe mit Komponenten des Parksperrenmoduls,
- Figur 5: die Verbindung zwischen Parksperrenrad im Parksperrenmodul und einem Abtriebsflansch zur Kardanwelle,
- Figur 6: eine Ausführungsvariante des Antriebsstrangs mit Parksperrenmodul in einer ersten Einbauposition und
- Figur 7: eine Darstellung des Antriebsstrangs eines Nutzfahrzeugs mit dem Parksperrenmodul in einer zweiten Einbauposition.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

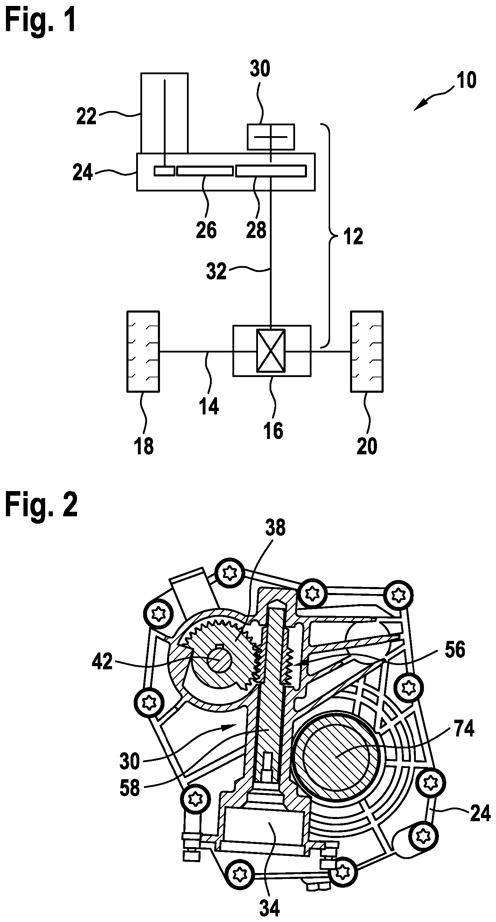

Figur 1 zeigt ein Fahrzeug 10 beziehungsweise dessen Antriebsstrang 12, welcher eine angetriebene Achse 14 umfasst. Bei der angetriebenen Achse 14 handelt es sich beispielsweise um die Hinterachse des Fahrzeugs 10. In der angetriebenen Achse 14 ist ein Differenzialgetriebe 16 aufgenommen, über welches ein erstes angetriebenes Rad 18 sowie ein diesem gegenüberliegendes zweites angetriebenes Rad 20 angetrieben werden. Im Antriebsstrang 12 des in Figur 1 teilweise dargestellten Fahrzeugs 10 befinden sich des Weiteren eine elektrische Maschine 22 sowie ein Getriebe 24. In der Darstellung gemäß Figur 1 umfasst das Getriebe 24 eine erste Übersetzungsstufe 26 und eine zweite Übersetzungsstufe 28. Ein erfindungsgemäß vorgeschlagenes Parksperrenmodul 30 ist an einer Stirnseite des Getriebes 24 angeflanscht, insbesondere gegenüber einer Kardanwelle 32. Über die Kardanwelle 32 erfolgt der Antrieb des Differenzialgetriebes 16 durch das Getriebe 24.

Anstelle der in Figur 1 dargestellten ersten Übersetzungsstufe 26 und der zweiten Übersetzungsstufe 28, kann das Getriebe 24 auch weitere Übersetzungsstufen enthalten.

Figur 2 zeigt ein Parksperrenmodul 30, welches an das Getriebe 24 gemäß der Darstellung in Figur 1 angeflanscht ist. Das Parksperrenmodul 30 umfasst neben einem Stellmotor 34 einen Sensor . Der Sensor ist insbesondere gegenüber einer Aktuierungswelle einer Aktuierungsmechanik 42 angeordnet, bevorzugt axial zu dieser. Über den Stellmotor 34 wird ein Schneckenrad 38 eines Untersetzungsgetriebes 56 angetrieben.

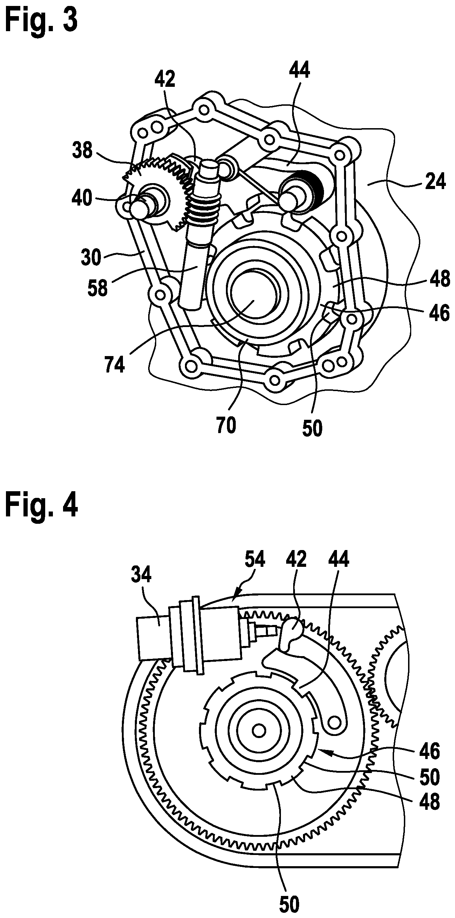

Aus der Darstellung gemäß Figur 2 geht ferner hervor, dass innerhalb des Parksperrenmoduls 30 der Stellmotor 34 senkrecht in Bezug auf die Aktuierungswelle der Aktuierungsmechanik 42 orientiert ist, wodurch eine äußerst kompakte Bauweise des Parksperrenmoduls 30 in axiale Richtung gesehen erreicht wird. Der Stellmotor 34 treibt eine Stellwelle 58 mit Schnecke an, die Teil eines Untersetzungsgetriebes 56 ist, ebenso wie das Schneckenrad 38. Mit Bezugszeichen 74 ist eine Welle bezeichnet, auf der ein Parksperrenrad 46 (vgl. Darstellung gemäß Figur 3) drehfest angeordnet ist und in dessen Außenverzahnung eine Klinke 44 eingreift, die durch die Aktuierungsmechanik 42 blockiert oder betätigt wird.

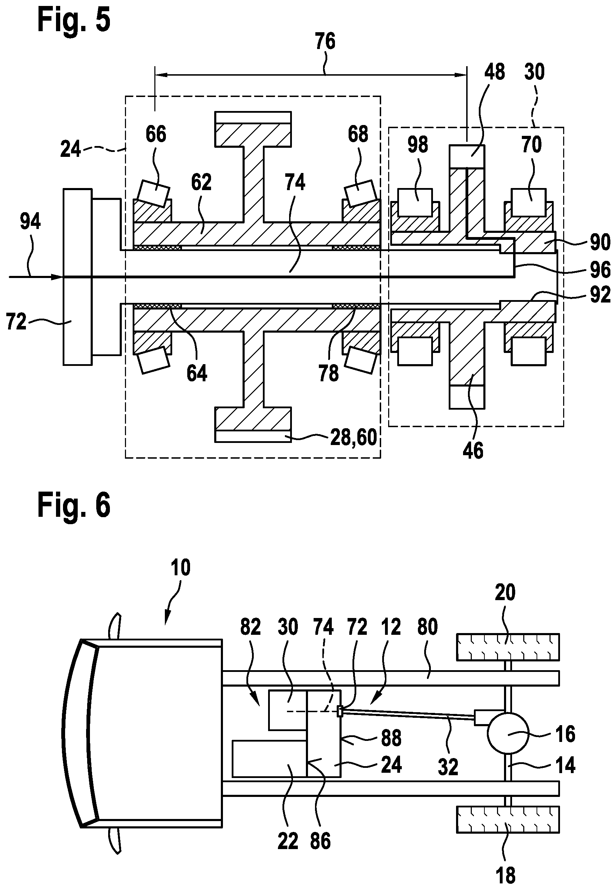

Figur 3 zeigt die perspektivische Ansicht eines Getriebes 24, wie teilweise in Figur 2 dargestellt. Auf der Aktuierungswelle der Aktuierungsmechanik 42 befindet sich - dem Sensor 36 gemäß Figur 2 zugeordnet - ein Magnet 40 zur Erfassung der Parksperrenposition. Die Aktuierungsmechanik 42 umfasst ferner einen über die Aktuierungswelle verschwenkbaren Nocken oberhalb der Klinke 44, der federvorgespannt ist. Über die Aktuierungswelle der Aktuierungsmechanik 42 wird die eine Rotationsbewegung ausführende Aktuierungsmechanik 42 betätigt . Über den Nocken der Aktuierungsmechanik 42 erfolgt die Steuerung der Klinke 44, deren Klinkenzahn in Rastfreiräume 50 einrastet, die durch Rastzähne 48 am Umfang eines Parksperrenrads 46 des Parksperrenmoduls 30 begrenzt werden. Das Parksperrenrad 46 ist drehfest, jedoch gedämpft durch ein Hülsenteil 90 auf der Welle 74 aufgenommen (vgl. Figur 5).

Aus der schematischen Darstellung des Parksperrenmoduls 30 gemäß Figur 3 geht hervor, dass aufgrund der Positionierung der Stellwelle 58 mit Schnecke, die durch den in Figur 3 nicht dargestellten Stellmotor 34 angetrieben wird, die axiale Baulänge des Parksperrenmoduls 30 erheblich verkürzt werden kann, da bei üblichen Ausführungen die Komponenten eines Parksperrenmoduls eher in axialer Richtung hintereinanderliegend angeordnet sind. Der Vollständigkeit halber sei erwähnt, dass in der perspektivischen Ansicht gemäß Figur 3 ein drittes Wälzlager 70 dargestellt ist, welches die Welle 74 abstützt, was im Zusammenhang mit Figur 5 noch eingehender beschrieben werden wird.

Der Darstellung gemäß Figur 4 ist zu entnehmen, dass der Stellmotor 34 in einem 90°-Versatz 54 bezüglich einer Aktuierungsrichtung zur Betätigung der rotatorisch bewegbaren Aktuierungsmechanik 42 mit Aktuierungswelle und Nocken angeordnet ist. Durch den 90°-Versatz 54, wie er in Figur 4 angedeutet ist, wird eine Kompaktbauweise des Parksperrenmoduls 30 erreicht. Aus Figur 4 geht des Weiteren hervor, dass die Aktuierungsmechanik 42 oberhalb einer Klinke 44 angeordnet ist. Wie Figur 4 zeigt ist die Klinke 44 in einen Rastfreiraum 50 eingerastet, der von den Flanken zweier nebeneinanderliegender Rastzähne 48 des Parksperrenrads 46 begrenzt ist. Das Parksperrenrad 46 wiederum ist drehfest - jedoch über ein Hülsenteil 90 gedämpft - auf der Welle 74 aufgenommen (vgl. Figur 5).

Figur 5 zeigt die Darstellung einer Verbindung zwischen einem Abtriebsflansch 72 für die Kardanwelle 32 und dem Parksperrenrad 46 des Parksperrenmoduls 30. Der Abtriebsflansch 72 ist drehfest an einer Stirnseite einer Welle 74 aufgenommen. Auf deren Umfang befindet sich ebenfalls in drehfester Anordnung das Parksperrenrad 46 des Parksperrenmoduls 30. Die Welle 74 ist von einer Hohlwelle 62 umschlossen. An der Hohlwelle 62 ist im Ausführungsbeispiel gemäß Figur 5 ein Zahnrad 60 des Getriebes 24, welches beispielsweise der zweiten Übersetzungsstufe 28 entspricht, aufgenommen. In der Darstellung gemäß Figur 5 bilden die Hohlwelle 62 und das Zahnrad 60 des Getriebes 24 ein Bauteil. Die Hohlwelle 62 ist über mindestens eine Wellen-Naben-Verbindung 64 drehfest mit der diese durchsetzenden Welle 74 verbunden. Die mindestens eine Wellen-Naben-Verbindung 64 dient gleichzeitig als Führungselement 78 zwischen der Hohlwelle 62 und der Welle 74. Diese ist in einer ihre Torsionsfestigkeit deutlich reduzierenden Wellenlänge 76 ausgeführt, so dass über den Antriebsstrang beziehungsweise in dessen Komponenten, zum Beispiel eine Kardanwelle 32 sowie im Abtriebsflansch 72 auftretende Erschütterungen erheblich gedämpft an Komponenten, wie zum Beispiel einen Rotor der im Antriebsstrang 12 angeordneten elektrischen Maschine 22, übertragen werden und im Idealfall gar nicht erst an den Rotor der elektrischen Maschine 22 übertragen werden, da inzwischen dissipiert.

Die Hohlwelle 62 ist über ein erstes Wälzlager 66 sowie ein zweites Wälzlager 68 im Gehäuse des Getriebes 24 gelagert. Optional kann an der Welle 74 jenseits des Parksperrenrads 46 ein weiteres drittes Wälzlager 70 aufgenommen sein, so dass die Anordnung aus Hohlwelle 62 und Welle 74 in mindestens zwei Wälzlagern 66, 68 oder auch in drei Wälzlagern 66, 68, 70 gelagert ist, was die Laufruhe in vorteilhafter Weise beeinflusst. Das Parksperrenmodul 30 ist in der Ausführungsvariante gemäß Figur 5 mit einem weiteren, vierten Wälzlager 98 versehen.

Das erste Wälzlager 66, das zweite Wälzlager 68 sowie die Wälzlager 70, 98 können beispielsweise als Zylinderrollenlager ausgeführt sein. Die Ausbildung der Wellenlänge 76 ist abhängig vom Bauraum, der innerhalb des Gehäuses des Getriebes 24 zur Verfügung steht und vom Material, welches für die Welle 74 Verwendung findet. Die Wellenlänge 76 wird so ausgelegt, dass deren Torsionssteifigkeit minimiert und deren Dämpfungsvermögen für Torsionsschwingungen maximiert wird. Um die Dämpfungseigenschaften des Parksperrenmoduls 30, welches seitlich am Getriebe 24 angeordnet ist und welches von der Welle 74 durchsetzt wird, nochmals zu verbessern, ist das Parksperrenrad 46 mittels des Hülsenteils 90 auf der Welle 74 drehfest, jedoch gedämpft aufgenommen.

Ein sich einstellender Kraftfluss 96 im blockierten Zustand des Parksperrenrads 46 verläuft über dieses zu einer drehfesten Verbindung 92, von dort über das Hülsenteil 90 in die Welle 74 zum Abtriebsflansch 72. Damit ist die Drehung der Kardanwelle 32 durch das blockierte Parksperrenrad 46 blockiert und auch die anderen Komponenten des Getriebes 24 vermögen keine rotatorische Bewegung auszuführen.

Figur 6 zeigt eine erste Ausführungsvariante eines Antriebsstrangs 12 für ein Fahrzeug 10, insbesondere für ein Nutzfahrzeug. Aus Figur 6 geht hervor, dass der Antriebsstrang 12 mit den Komponenten angetriebene Achse 14, Differenzialgetriebe 16, elektrische Maschine 22, Getriebe 24 und dem Parksperrenmodul 30 an einem Fahrzeugchassis 80 untergebracht ist. Aus Figur 6 geht hervor, dass sich das Parksperrenmodul 30 in einer ersten Einbauposition 82 befindet. Durch Bezugszeichen 74 ist die in Figur 5 im Detail dargestellte Welle angedeutet, die sich vom Parksperrenrad 46 des Parksperrenmoduls 30 durch das Getriebe 24 zum Abtriebsflansch 72 erstreckt, der mit der Kardanwelle 32 verbunden ist, die zum Differenzialgetriebe 16 verläuft. Dieses treibt an der angetriebenen Achse 14 das erste angetriebene Rad 18 sowie das zweite angetriebene Rad 20 an. Aus der Darstellung gemäß Figur 6 geht hervor, dass sich in dieser Ausführungsvariante des Antriebsstrangs 12 das Parksperrenmodul 30 sowie die elektrische Maschine 22 auf einer Eingangsseite 86 des Getriebes 24 befinden. Das Parksperrenmodul 30 ist so angeordnet, dass dessen Parksperrenrad 46 sowie der Abtriebsflansch 72 für die Kardanwelle 32 miteinander fluchten. In dieser Einbauposition entspricht das in Figur 5 dargestellte Zahnrad 60 einer zweiten Übersetzungsstufe 28 des Getriebes 24, wie es in Figur 1 dargestellt ist.

Auf einer Ausgangsseite 88 des Getriebes 24 liegt der Abtriebsflansch 72, über den die Kardanwelle 32 mit der Ausgangsseite 88 des Getriebes 24, hier der zweiten Übersetzungsstufe 28 des Getriebes 24, verbunden ist.

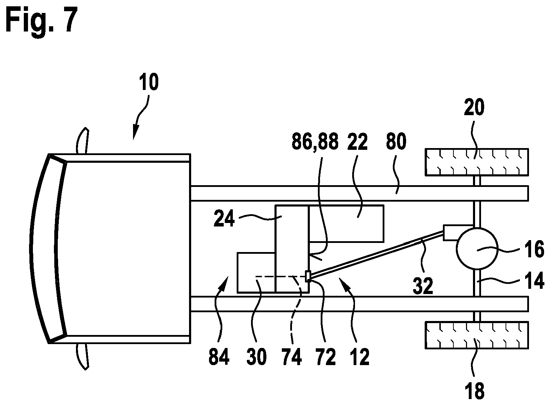

In Figur 7 ist eine Ausführungsvariante des Antriebsstrangs 12 dargestellt, der das Parksperrenmodul 30, das Getriebe 24 sowie die elektrische Maschine 22 umfasst. In der Ausführungsvariante gemäß Figur 7 ist das Parksperrenmodul 30 in einer zweiten Einbauposition 84 am Getriebe 24 montiert. Auch hier fluchtet das Parksperrenrad 46, welches Teil des Parksperrenmoduls 30 ist, mit dem Abtriebsflansch 72 zum Anschluss der Kardanwelle 32. Auch in Figur 7 ist die Welle 74 schematisch angedeutet, die im Detail in Figur 5 dargestellt ist und das Parksperrenrad 46 des Parksperrenmoduls 30 entsprechend ihrer Wellenlänge 76 mit dem Abtriebsflansch 72 zum Anschluss der Kardanwelle 32 verbindet. In der Ausführungsvariante gemäß Figur 4 fallen die Eingangsseite 86 und die Ausgangsseite 88 des Getriebes 24 miteinander zusammen, d. h. die elektrische Maschine 22 liegt parallel zur Kardanwelle 32 des Antriebsstrangs 12. In der in Figur 7 dargestellten Ausführungsvariante des Antriebsstrangs 12 fluchtet das Parksperrenrad 46 des Parksperrenmoduls 30 ebenfalls mit dem Abtriebsflansch 72 zum Anschluss der Kardanwelle 32. Figur 7 zeigt, dass in dieser Ausführungsvariante der Abtriebsflansch 72 an der ersten Übersetzungsstufe 26 des Getriebes 24 liegt (vgl. Darstellung gemäß Figur 1).

Das erfindungsgemäß vorgeschlagene Parksperrenmodul 30 kann an beiden Getriebeausgängen des Getriebes 24 eingebaut werden. Um eine Modularität und damit eine Einbauvarianz des erfindungsgemäß vorgeschlagenen Parksperrenmoduls 30 zu steigern, ist dieses sehr kompakt ausgestaltet, was durch den 90°-Versatz 54 des Stellmotors 34 relativ zur Aktuierungsmechanik 42 ermöglicht wird. Im erfindungsgemäß vorgeschlagenen Parksperrenmodul 30 erfolgt die Sensierung der Position der Aktuierungsmechanik 42 stirnseitig durch den Sensor 38 beziehungsweise den diesem zugeordneten Magneten 40. Ein schlagender Vorteil der erfindungsgemäß vorgeschlagenen Lösung liegt darin, dass aufgrund der Wellenlänge 76 der Welle 74, auf der der Abtriebsflansch 72 zum Anschluss der Kardanwelle 32 sowie das Parksperrenrad 46 des Parksperrenmoduls 30 aufgenommen sind, eine Verringerung der Torsionssteifigkeit ermöglicht, wodurch die Komponenten der elektrischen Maschine 22, die innerhalb des Antriebsstrangs 12 verbaut ist, gegen Erschütterungen in erheblichem Maße geschützt sind.

Die erfindungsgemäß vorgeschlagene Parksperre kann in elektrisch angetriebenen Nutzfahrzeugen wie auch in elektrisch angetriebenen Fahrzeugen eingesetzt werden und ist hinsichtlich ihrer Einbaupositionen 82, 84 sehr variabel unterzubringen, was deren Varianz günstig beeinflusst und einen erheblichen Kostenvorteil mit sich bringt.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Antriebsstrang (12) eines elektrisch angetriebenen Nutzfahrzeugs oder eines elektrisch angetriebenen Personenwagens mit einer elektrischen Maschine (22), einem Getriebe (24), das durch die elektrische Maschine (22) angetrieben ist, und einem an dem Getriebe (24) angeordneten Parksperrenmodul (3), wobei das Parksperrenmodul (30) einen Stellmotor (34), eine mittels des Stellmotors rotatorisch bewegbare Aktuierungsmechanik (42) und ein Parksperrenrad (46) umfasst, wobei eine durch die Aktuierungsmechanik (42) blockierte oder betätigte Klinke (44) in eine Außenverzahnung des Parksperrenrades (46) eingreift und das Parksperrenrad (46) auf einer Welle (74) des Getriebes (24) drehfest gelagert ist, wobei die Welle (74) eine Hohlwelle (62) des Getriebes (24) durchsetzt und die Hohlwelle (62) in mindestens zwei Wälzlagern (66, 68) gelagert ist und über mindestens eine Wellen-Narben-Verbindung (64) drehfest mit der Welle (74) verbunden ist, so dass das Parksperrenrad (46) drehfest mit einem an der Hohlwelle (62) ausgeführten Zahnrad (60) des Getriebes (24) verbunden ist, wobei an einer Stirnseite der Welle (74) ein auf einer Ausgangsseite des Getriebes (24) liegender Abtriebsflansch (72) für eine Kardanwelle (32) drehfest aufgenommen ist, wobei die Welle (74) in einer in ihrer Torsionssteifigkeit reduzierenden Länge (76) ausgeführt ist, wobei die Länge (76) der Welle (74) so ausgelegt ist, dass die Torsionssteifigkeit der Welle (74) minimiert und ihre Dämpfungseigenschaften für Torsionsschwingungen maximiert sind, so dass am Abtriebsflansch (72) auftretende Erschütterungen, welche auf die elektrische Maschine einwirken können, erheblich gedämpft werden.

2. Antriebsstrang (12) gemäß Anspruch 1, **dadurch gekennzeichnet, dass** der Stellmotor (34) eine Stellwelle (58) mit einer Schnecke antreibt, wobei die Schnecke und ein auf einer Aktuierungswelle der Aktuierungsmechanik (42) angeordnetes Schneckenrad (38) Teile eines Untersetzungsgetriebes (56) sind, wobei der Stellmotor (34) mit der von diesem angetriebenen Stellwelle (58) senkrecht in Bezug auf die Aktuierungswelle der Aktuierungsmechanik angeordnet ist.

3. Antriebsstrang (12) gemäß den Ansprüchen 1 oder 2, **dadurch gekennzeichnet, dass** in einem Zustand, in welchem das Parksperrenrad (46) blockiert ist, ein Kraftschluss über die Welle (74) in die mindestens eine Wellen-Naben-Verbindung (64), von dort in die Hohlwelle (62) und in das an dieser ausgebildete Zahnrad (48, 60) des Getriebes (24) verläuft.

4. Antriebsstrang (12) gemäß den Ansprüchen 1 bis 3, **dadurch gekennzeichnet, dass** das Parksperrenrad (46) drehfest, jedoch gedämpft durch ein Hülsenteil (90) auf der Welle (74) aufgenommen ist.
